# EUROPÄISCHE PATENTSCHRIFT

(11) **EP 2 297 594 B1**
(45) Veröffentlichungstag und Bekanntmachung des Hinweises auf die Patenterteilung: **07.09.2016**
(21) Anmeldenummer: 09772451.2
(22) Anmeldetag: 30.06.2009
(51) Int. Cl.: G01S 17/58, G01S 17/95

(54) **LIDAR-VERFAHREN ZUR MESSUNG VON GESCHWINDIGKEITEN UND LIDAR-VORRICHTUNG MIT ZEITGESTEUERTER DETEKTION**
LIDAR METHOD FOR MEASURING SPEEDS AND LIDAR DEVICE WITH TIME-CONTROLLED DETECTION
PROCÉDÉ DE MESURE DE VITESSES PAR LIDAR ET DISPOSITIF LIDAR À DÉTECTION RÉGULÉE DANS LE TEMPS

(30) Priorität: 04.07.2008 DE 102008031681
(43) Veröffentlichungstag der Anmeldung: 23.03.2011
(73) Patentinhaber: Airbus Defence and Space GmbH, 85521 Ottobrunn (DE)
(72) Erfinder: SCHMITT, Nikolaus, 85649 Otterloh (DE); REHM, Wolfgang, 88138 Hergensweiler (DE); PISTNER, Thomas, 80993 München (DE)
(74) Vertreter: Kastel, Stefan
(86) Internationale Anmeldenummer: PCT/EP2009/058213
(87) Internationale Veröffentlichungsnummer: WO 2010/000751

(56) Entgegenhaltungen:
- DE-A1- 4 013 702
- US-A1- 2008 043 234
- SCHMITT ET AL: "The AWIATOR airborne LIDAR turbulence sensor" AEROSPACE SCIENCE AND TECHNOLOGY, EDITIONS SCIENTIFIQUES ET MEDICALES ELSEVIER, Bd. 11, Nr. 7-8, 1. November 2007 (2007-11-01), Seiten 546-552, XP022329043 ISSN: 1270-9638
- DURAND ET AL: "ALADIN Airborne Demonstrator: a Doppler Wind Lidar to prepare ESA's ADM-Aeolus Explorer Mission" PROC OF SPIE, [Online] Bd. 6296, 2006, Seiten 62961D-1-62961D-13, XP002553101 Gefunden im Internet: URL:http://spiedl.aip.org/getpdf/servlet/G etPDFServlet?filetype=pdf&id=PSISDG0062960 0000162961D000001&idtype=cvips&prog=normal > [gefunden am 2009-10-30]
- ENDEMAN: "ADM-Aeolus, the first spaceborn wind lidar" PROC OF SPIE, [Online] Bd. 6409, 2006, Seiten 64090G-1-64090G-15, XP002553102 Gefunden im Internet: URL:http://spiedl.aip.org/getpdf/servlet/G etPDFServlet?filetype=pdf&id=PSISDG0064090 0000164090G000001&idtype=cvips&prog=normal > [gefunden am 2009-10-30]

## Beschreibung

Die Erfindung betrifft ein LIDAR-Verfahren zur Messung von Geschwindigkeiten und eine LIDAR-Vorrichtung zum Durchführen eines solchen LIDAR-Verfahrens.

Die vorliegende Erfindung beschreibt insbesondere ein Doppler-LIDAR-System zur Messung von Geschwindigkeiten unter Verwendung der Direktempfangstechnik, das beispielsweise zur Messung von Turbulenzen vor einem Flugzeug, aber auch zur Messung von Wirbelschleppen, Scherwinden, Strömungen vor Hindernissen, zur Vermessung von Windfeldern zur Energiegewinnung etc. verwendet werden kann. Die Erfindung betrifft damit insbesondere eine Doppler-LIDAR-Messung von Geschwindigkeiten mittels Direktempfang sowie eine Direktempfang-Doppler-LIDAR-Vorrichtung zur Durchführung des Verfahrens.

LIDAR steht für "light detection and ranging" und ist eine dem Radar ("radiowave detection and ranging") sehr verwandte Methode zur Entfernungs- und Geschwindigkeitsmessung sowie zur Fernmessung atmosphärischer Parameter. Statt Funkwellen wie beim RADAR werden jedoch Laserstrahlen verwendet.

Ein Beispiel für eine Doppler-LIDAR-Vorrichtung und ein damit durchführbares Verfahren zur Messung von Windgeschwindigkeiten ist aus der EP1756620 B1, US 20080117433 A1 oder US 2006262324 A1 bekannt.

Bei Direktempfang-Doppler-Lidar-Vorrichtungen wird Laserstrahlung auf das zu messende Medium gerichtet und die daraufhin reflektierte Strahlung direkt empfangen und hinsichtlich einer Doppler-Verschiebung der Laserwellenlänge untersucht, um so Relativgeschwindigkeiten festzustellen.

Doppler-LIDAR-Systeme unter Verwendung der Direktempfangstechnik werden beispielsweise zur vorausschauenden Messung von Turbulenzen, Seitenwinden oder Wirbelschleppen vor einem Luftfahrzeug, insbesondere Flugzeug, verwendet. Im Falle einer luftfahrzeuggetragenen, insbesondere flugzeuggetragenen Anwendung zur Messung vor dem Luftfahrzeug, welche als typische Anwendung im Folgenden betrachtet wird, können neben einer reinen Warnfunktion die Messsignale insbesondere auch direkt in die Flugsteuerung des Luftfahrzeuges eingekoppelt werden, um beispielsweise Böen, Seitenwinde oder Wirbelschleppeneinflüsse proaktiv, also bevor das Luftfahrzeug negativ auf die äußere Strömungsänderung reagiert, so auszuregeln, dass ein gleichbleibender ruhiger Flugzustand erhalten bleibt, Belastung des Luftfahrzeuges reduziert werden und die Sicherheit im Luftfahrzeug und für das Luftfahrzeug gewährleistet bleibt.

Einige wesentliche Probleme bei bisher bekannter flugzeuggetragenen zu ähnlichen Zwecken konzipierten LIDAR-Systemen werden im Folgenden beispielhaft genannt:
- Rückreflexe an einem das LIDAR-System abdeckenden optischen Fenster aufgrund von Oberflächenreflexen oder Verschmutzung stören die Messung.
- Hintergrundlicht, insbesondere solare Hintergrundstrahlung im optischen Bereich muss aufwändig unterdrückt werden.
- Es ist wünschenswert, die Messentfernung so zu optimieren, dass die Messung hinreichend weit vor dem Flugzeug erfolgt, so dass die Messsignale vor Durchfliegen der Störung im Flugzeug vorliegen. Zum Beispiel sollen die Messsignale frühzeitig in die Flugsteuerung eingekoppelt werden, so dass das Flugzeug gegen die Störung gesteuert werden kann. Aber trotzdem soll insgesamt eine hinreichende Signalintensität, welche mit zunehmender Messentfernung abnimmt, für gegebene Genauigkeitsanforderungen gewährleistet bleiben. Dies ist mit bisher bekannten Systemen nicht möglich.
- Bei bisher bekannten Systemen lässt sich die Messtiefe nicht hinreichend flexibel einstellen oder optimieren. Jedoch ist eine Optimierung der Messtiefe derart wünschenswert, dass die Messung die Gradienten einer Turbulenz hinreichend aufgelöst erfassen kann (Turbulenzgradienten, Turbulenzlänge und Turbulenzkohärenz), aber insgesamt trotzdem eine hinreichende Signalintensität, welche mit abnehmender Messtiefe ebenfalls abnimmt, für gegebene Genauigkeitsanforderungen gewährleistet bleibt.

In N. P. Schmitt et. al, Aerosp. Sci. Technol. 11, 546 (2007) ist ein Kurzpuls-Direktempfang-UV-LIDAR zur Messung von relativen Windgeschwindigkeiten beschrieben, bei dem zur Optimierung der Signalintensität ein Detektor geschaltet wird.

In der US 2008/0043234 A1 ist ein LIDAR-System offenbart, bei dem ein in dem auszusendenden Strahl eingeschaltetes Prisma-System derart verwendet werden kann, dass eine von vier Winkelmessrichtungen und ein Zeitintervall eingestellt werden können.

Y. Durand et. al., Proc. SPIE, 6296, 62961 D-1 (2006) beschreibt ein LIDAR-System, bei dem einem von einem Messobjekt zurückgestreuten Signal zu vorbestimmten Zeitpunkten und -spannen eine Charakteristik über einen elektrooptischen Modulator aufgeprägt wird, um so das Signal zur unterdrücken.

In M. Endemann, Proc. SPIE, 6409, 64090 G-1 (2006) ist ein LIDAR-Verfahren beschrieben, bei dem in vorbestimmten zeitlichen Abständen und für vorbestimmte zeitliche Zeitspannen Laserstrahlen ausgesendet werden, um so die Messtiefe und die Messzeitpunkte der zurückgestreuten Laserstrahlen zu beeinflussen.

In der DE 4013702 A1 ist ein Verfahren zur Erfassung von Turbulenzen, insbesondere von Windgeschwindigkeiten, offenbart, wobei eine hinter einem Detektor geschaltete Auswerteeinrichtung nur Signale innerhalb von einzelnen Zeitabschnitten auswertet.

Aufgabe der Erfindung ist es, ein für luftfahrzeuggetragene Anwendung grundsätzlich geeignetes LIDAR-Messverfahren hinsichtlich der vorgenannten Probleme zu optimieren. Außerdem soll eine LIDAR-Vorrichtung geschaffen werden, mittels dem sich das Verfahren - vorzugsweise automatisch - durchführen lässt.

Diese Aufgabe wird durch ein LIDAR-Messverfahren mit den Schritten des Patentanspruches 1 sowie eine LIDAR-Vorrichtung mit den Merkmalen des Nebenanspruches gelöst.

Vorteilhafte Ausgestaltungen der Erfindung sind Gegenstand der Unteransprüche.

Erfindungsgemäß wird bei einem Verfahren zur LIDAR-Messung von Geschwindigkeiten, wobei ein Laserstrahl auf das zu messende Medium gerichtet wird und von dem Medium daraufhin gestreute Strahlung mittels eines Detektors gemessen wird, ein räumlicher Messbereich durch Aktivieren und/oder Inaktivieren des Detektors mit wenigstens einer vorbestimmten oder geregelten Zeitdauer T1, T2 von weniger als etwa 500µs nach Absenden eines Laserpulses auf das zu messende Medium eingestellt.

Weiter wird erfindungsgemäß eine LIDAR-Vorrichtung zum Messen von Geschwindigkeiten vorgeschlagen, mit einer Laserquelle zum Aussenden von Laserstrahlung auf ein zu messendes Medium und einem Detektor zum Empfangen von Strahlung, die bei Bestrahlung mit der Laserstrahlung von dem Medium abgestrahlt, insbesondere gestreut, wird. Es ist vorgesehen, dass die Laserquelle zur Aussendung eines Laserpulses fähig ist, dass eine Schalteinrichtung zum Aktivieren/Deaktivieren des Detektors abhängig von einem Zeitpunkt des Aussendens des Laserpulses durch die Laserquelle fähig ist und dass die Schalteinrichtung zum Aktivieren/Deaktivieren des Detektors mit wenigstens einer vorbestimmten oder geregelten Zeitdauer T1, T2 von weniger als etwa 500µs nach Absenden des Laserpulses auf das zu messende Medium ausgebildet ist.

In bevorzugter Ausgestaltung wird eine LIDAR-Vorrichtung zum Messen von Geschwindigkeiten vorgeschlagen, mit einer Laserquelle zum Aussenden von Laserstrahlung auf ein zu messendes Medium, einem Detektor zum Empfangen von Strahlung, die bei Bestrahlung mit der Laserstrahlung von dem Medium abgestrahlt, insbesondere gestreut, wird, und einer Auswerteeinrichtung, welche aufgrund der von dem Detektor empfangenen Strahlung wenigstens eine Geschwindigkeit des Mediums bestimmt. Die Laserquelle ist zur Aussendung von Laserpulsen fähig, wobei die Pulsdauer kürzer als die zum Durchlaufen der Messentfernung erforderliche Zeit ist.

Vorzugsweise weist der Detektor wenigstens eine der folgenden Lichterfassungseinrichtungen auf:
- einen bildgebender Detektor, insbesondere Kamera,
- ein lichtempfindliches Element, insbesondere Photodiode oder Photomultiplier, oder
- eine Gruppe von lichtempfindlichen Elementen, insbesondere Photodioden.

Das erfindungsgemäße Messverfahren ist vorzugsweise ein Doppler-LIDAR-Messverfahren unter Verwendung der Direktempfangstechnik. Die LIDAR-Vorrichtung ist demgemäß vorzugsweise eine Direktempfang-Doppler-LIDAR-Vorrichtung.

Der Laserpuls wird vorzugsweise durch ein optisch durchlässiges Element gesendet, wobei eine erste Zeitdauer T1 zwischen Aussenden des Laserpulses aus der Laserquelle und dem Einschaltzeitpunkt t1größer als die Zeit ist, die der Laserpuls zu dem optisch durchlässigen Element und von dort zurück zu dem Detektor benötigt.

Vorteilhafte Wirkungen der Erfindung und/oder deren vorteilhaften Ausgestaltungen sind die Unterdrückung von Reflexen an einem optisch durchlässigen Element, wie Abdeckelement und insbesondere Durchtrittsfenster, Reduktion des Einflusses von Schmutz hierauf, Optimierung von Messentfernung und Messtiefe eines LIDAR-Systems und weitestgehende Unterdrückung der Detektion störender Hintergrundstrahlung.

In der vorliegenden Erfindung wird vorgeschlagen, einen Detektor, mit dem von einem Medium, das zuvor mit einem Laserpuls bestrahlt worden ist, kommendes Licht erfassbar ist, schnell zu schalten (engl. gating), beispielsweise um nur das rückgestreute Licht aus der erwünschten Messentfernung und Messtiefe zu erhalten.

In vorteilhaften Ausgestaltungen lassen sich durch entsprechende vorteilhafter Einstellung z.B. durch schnelles Schalten des Detektors Reflexe an einer Scheibe und Schmutz unterdrücken und das Hintergrundlicht reduzieren. Weiter können durch geeignete Einstellung oder sogar dynamische Regelung der Schaltzeiten (Gatezeiten) der Messabstand und die Messtiefe angepasst werden.

Die Anpassung der Schaltzeiten kann gemäß einer Weiterbildung der Erfindung zum Beispiel auch je nach Intensität des Signals, z.B. aufgrund Änderungen in der Rückstreucharakteristik, und Systemanforderungen, z.B. Messung einer eigenen Geschwindigkeit der LIDAR-Vorrichtung, beispielsweise Fluggeschwindigkeit bei luftfahrzeuggetragenen Anwendungen, erwartete Böengradienten etc. gesteuert oder geregelt werden, so dass das System immer im Optimum der gegenläufigen Parameter Messentfernung/Messtiefe und Signalintensität/Genauigkeitsanforderung betrieben wird.

Vorzugsweise ist die LIDAR-Vorrichtung auf einem bewegten Träger angeordnet, wobei Zeitpunkte und/oder Zeitdauern zum Aktivieren/Deaktivieren des Detektors abhängig von der Geschwindigkeit des Trägers gesteuert sind.

Gemäß einer weiteren Weiterbildung der Erfindung kann das System umgeschaltet werden zwischen verschiedenen Modi wie beispielsweise ungenauerer, aber weiter vorausschauender Messung zur Erhöhung der Sicherheit (negative -g -prevention) und Erhöhung des Reisekomforts oder aber kürzerreichweitigere, aber genauere Messung für Flügellastreduktion oder in noch kürzerer Entfernung für optische Luftdatenmessung.

Bei sich ändernder Signalintensität aufgrund beispielweise schwankender Rückstreuung oder reduzierter Anforderungen an die Messentfernung aufgrund beispielsweise reduzierter Fluggeschwindigkeit bei luftfahrzeuggetragenen Anwendungen kann mit den Mitteln einer vorteilhaften Ausgestaltung dieser Erfindung die Messentfernung angepasst werden.

Ebenso kann bei sich ändernder Signalintensität aufgrund beispielsweise schwankender Rückstreuung oder reduzierter Anforderungen an die Messtiefe beispielsweise in Erwartung nur langer Böen mit geringen Gradienten mit den Mitteln einer vorteilhaften Ausgestaltung dieser Erfindung die Messentfernung angepasst werden.

Vorteilhaft wird wenigstens eine Zeitdauer T1, T2 und/oder wenigstens ein Zeitpunkt t1, t2 zur Veränderung des räumlichen Messbereichs r2-r1 für unterschiedliche Messaufgaben unterschiedlich ausgewählt, gesteuert, geregelt und/oder eingestellt.

Dabei wird besonders bevorzugt die erste Zeitdauer T1 bei einem bewegten Messsystem abhängig von der Geschwindigkeit des Messsystems von Messpuls zu Messpuls innerhalb eines Belichtungsvorganges verändert.

Vorzugsweise wird das Verfahren zur Vermessung von Luftgeschwindigkeiten von einem Luftfahrzeug aus durchgeführt.

Besonders bevorzugt wird das Verfahren zur Sicherheit und Komforterhöhung mit größerer Messentfernung, zur Lastreduktion von Bauteilen des Luftfahrzeuges mit mittlerer Messentfernung mit höherer Genauigkeit und zur optischen Messung von Luftdaten mit kurzer Messentfernung durchgeführt und die wenigstens eine Zeitdauer T1, T2 und/oder wenigstens eine der Zeitpunkte t1, t2 entsprechend diesen Messaufgaben eingestellt.

Gemäß einer vorteilhaften Ausgestaltung der Erfindung ist ein Doppler-Lidar-System zur Messung von Geschwindigkeiten, beispielsweise der Luftgeschwindigkeit, unter Verwendung der Direktempfangs-Technik vorgesehen, bei der der Detektor mit einer schnellen Schalteinrichtung mit Schaltzeiten im Bereich kleiner oder deutlich kleiner 1 Millisekunde ausgestattet ist. Die Schalteinrichtung ist derart ausgebildet, dass beispielsweise über eine Steuerelektronik oder sonstige Steuereinrichtung die Dauer der Belichtung des Detektors und/oder der Zeitpunkt der Belichtung des Detektor gesteuert werden kann. Die Steuerung erfolgt vorzugsweise derart, dass die Messtiefe und/oder der Messabstand eingestellt werden kann.

Ein weiterer vorteilhafter Aspekt der Erfindung betrifft ein Lidar-System, insbesondere ein Doppler-Lidar-System zur Messung von Geschwindigkeiten, beispielsweise der Luftgeschwindigkeit, unter Verwendung der Direktempfangs-Technik, bei der als Detektor ein bildgebender Detektor (beispielsweise eine Kamera) oder ein oder mehrere einzelne lichtempfindliche Elemente, beispielsweise Photodioden, Photomultiplier, verwendet werden. Als Detektor können auch Arrays solcher lichtempfindlicher Elemente, CCD-Chips oder dergleichen Verwendung finden.

Gemäß einem weiteren vorteilhaften Aspekt der Erfindung weist die Schalteinrichtung ein vor den Detektor geschaltetes Schaltelement auf, das zum Aktivieren des Detektors Licht durchlässt und zum Deaktivieren das Licht abblockt.

Ein Umschalten zwischen diesen Zuständen ist mit den erwähnten kurzen Schaltzeiten möglich. Beispiele für solche Schaltelemente sind eine schaltbare Mikrokanalplatte (gateable microchannel plate), ein zur Schaltung verwendetes elektrooptisches Material (bspw. LiNbO3), eine Flüssigkristallzelle oder ein zum Schalten bewegbares mikromechanisches Element (beispielsweise ein Mikrospiegelarray).

Anstelle oder zusätzlich zu einem solchen Schaltelement kann die Schaltung aber auch unmittelbar an dem Detektor selbst erfolgen. Hierzu ist gemäß einem vorteilhaften Aspekt der Erfindung vorgesehen, dass die Schaltung elektrisch am Detektor erfolgt. Im Falle eines Lichtdetektorarrays, das als Detektor eingesetzt wird, wird eine Schaltung vorzugsweise an jedem Ausgang für jedes lichtsensitive Detektorelement durchgeführt.

Gemäß einem vorteilhaften Aspekt der Erfindung bleibt der Detektor zumindest für die Zeit ausgeschaltet, die der Strecke des Lichtes von der Strahlquelle bis zu einem optischen Element, wie insbesondere einem Durchtrittsfenster des Lichtstrahls in die freie Umgebung, beispielsweise einem Fenster in einer Flugzeughaut, und wieder zurück zum Detektor benötigt, so dass ein möglicher Reflex an diesem optisch durchlässigen Element, insbesondere Fenster, oder einer sich darauf befindlichen (Schmutz)schicht nicht vom Detektor wahrgenommen werden kann.

Gemäß einem weiteren vorteilhaften Aspekt der Erfindung wird der Detektor nach einer Zeit, die der Laufzeit des Lichtes von der Strahlquelle bis zum Erreichen des angestrebten Messvolumens und gegebenenfalls nach Durchlaufen derselben hin- und wieder zurück zum Detektor entspricht, wieder so geschaltet, dass er kein Licht mehr detektiert, so dass die Detektion eventuellen Hintergrundlichtes reduziert wird.

Gemäß einem weiteren vorteilhaften Aspekt der Erfindung wird die einer minimalen Messentfernung r1 entsprechende Zeit, die das Licht von der Strahlquelle bis zum Beginn des gewünschten Messvolumens und gegebenenfalls zurück zum Detektor benötigt, oder die maximale Messentfernung r2, die das Licht von der Strahlquelle bis zum Ende des gewünschten Messvolumens und gegebenenfalls zurück zum Detektor benötigt, in Abhängigkeit von Messparametern wie beispielsweise der erforderlichen Intensität, Genauigkeit etc. des detektierten Signals eingestellt.

Gemäß einem weiteren vorteilhaften Aspekt der Erfindung wird die einem minimalen räumlichen Messbereich oder Messvolumen r2-r1 entsprechende Zeit, die das Licht zum Durchlaufen des Messbereichs/Messvolumens und gegebenenfalls zurück benötigt, in Abhängigkeit von Systemparametern wie beispielsweise Fluggeschwindigkeit eines Luftfahrzeuges, z.B. Flugzeugs, in welchem das LIDAR system montiert ist, oder sonstiger die erforderliche Messentfernung beeinflussender Verfahren eingestellt.

Gemäß einem weiteren vorteilhaften Aspekt der Erfindung wird die Einstellung der r1, r2 entsprechenden Zeitdauern T1, T1+T2 dynamisch während eines länger dauernden Messeinsatzes gesteuert oder geregelt.

Gemäß einem weiteren vorteilhaften Aspekt der Erfindung wird die einem minimalen Messvolumen r2-r1 entsprechende Zeitdauer T2, die das Licht zum Durchlaufen des Messvolumens und gegebenenfalls zurück benötigt, in Abhängigkeit von Messparametern wie beispielsweise der erforderlichen Intensität des detektierten Signals eingestellt oder geregelt.

Gemäß einem weiteren vorteilhaften Aspekt der Erfindung wird die einem minimalen Messvolumen r2-r1 entsprechende Zeit, die das Licht zum Durchlaufen des Messvolumens und gegebenenfalls zurück benötigt, in Abhängigkeit von Systemparametern wie beispielsweise der erwarteten Dynamik des Messsignals, Kohärenz einer zu messenden Luftböe etc, gemessen.

Die Einstellung der Zeit kann vorteilhafterweise dynamisch während eines länger dauernden Messeinsatzes gesteuert oder geregelt werden.

Gemäß einem weiteren vorteilhaften Aspekt der Erfindung erfolgt die Einstellung der entsprechenden Schaltzeit und/oder Belichtungszeit nach aktueller Erfordernis oder sequentiell zur Erfüllung unterschiedlicher Messaufgaben. Beispielsweise wird eine große Messentfernung für Sicherheit/Komforterhöhung, eine kurze Messweite mit erhöhter Genauigkeit zur Flügellastreduktion und ganz kurze Reichweite zur optischen Messung von Luftdaten eingestellt.

Gemäß einem weiteren vorteilhaften Aspekt der Erfindung wird zur Messung eines Referenzsignals, welches der Laseranordnung entnommen und nicht im Messvolumen gestreut wurde, eine entsprechend verkürzte Zeit zur Schaltung des Detektors, und zwar in Bezug auf Zeitpunkt und/oder Zeitdauer, verwendet.

Vorzugsweise erfolgt eine Erfassung des Referenzsignals periodisch oder zufällig in einem jeweiligen Messzyklus der LIDAR-Messung.

Besonders bevorzugt wird ein zu detektierendes Signal, insbesondere das Referenzsignal und/oder die abgestrahlte Strahlung, vor Auftreffen auf den Detektor über eine optische Verzögerungsstrecke geleitet, um das Signal zu verzögern.

Die Messung des Referenzsignals kann insbesondere periodisch oder zufällig im gesamten Messzyklus der LIDAR-Messung erfolgen. Entsprechend können dadurch die Schaltzeiten des Detektors periodisch oder zufällig geändert werden. Die vorgenannten Schritte werden vorzugsweise automatisch in einer entsprechend ausgebildeten, zum Beispiel mit einer entsprechend eingerichteten und/oder programmierten Steuerung versehenen (Direktempfang-Doppler-)LIDAR-Vorrichtung durchgeführt.

Bei einer besonders bevorzugten Ausgestaltung der Erfindung wird wenigstens die erste Zeitdauer T1 zwischen dem Aussenden des Laserpulses und der Einschaltzeitpunkt t1 oder andere relevante Zeitdauern oder Zeitpunkte abhängig von der Geschwindigkeit eines Trägers der LIDAR-Vorrichtung gesteuert oder geregelt. Damit kann man insbesondere aus einem bewegten System wie einem Luftfahrzeug oder dergleichen heraus ein in einem ortsfesten Koordinatensystem ortsfestes Messvolumen vermessen. In einer konkreten praktischen beispielhaften Ausgestaltung wird zum Beispiel die erste Zeitdauer T1 innerhalb einer Belichtung, die mit mehreren der Laserpulse durchgeführt wird, von Puls zu Puls so verkürzt, dass das Messvolumen trotz der Eigenbewegung des Trägers (z.B. Flugzeugs) im luftbezogenen äußeren Koordinatensystems für jeden aufgenommenen Laserpuls konstant ist.

Ausführungsbeispiele der Erfindung werden nachfolgend anhand der beigefügten Zeichnungen näher erläutert. Darin zeigen
- Fig. 1: eine schematische Darstellung einer flugzeuggetragenen LIDAR-Vorrichtung am Beispiel einer Messanordnung eines LIDARS zur vorausschauenden Turbulenzmessung in einem Flugzeug mit Kennzeichnung von drei Strecken r1, r2, 20;
- Fig. 2: eine schematische Darstellung einer bei der Vorrichtung von Fig. 1 einsetzbaren Detektoranordnung am Beispiel einer Detektoranordnung bei Direktempfang;
- Fig. 3: ein Beispiel eines Interferogramms (fringe image), das mit der Detektoranordnung von Fig. 3 aufgenommen wird;
- Fig. 4a: eine schematische Darstellung eines Zeitdiagramms mit An- und Abschaltzeiten zum Schalten der Detektor-Anordnung;
- Fig. 4b: eine schematische Darstellung analog zu Fig. 4a eines Zeitdiagramms mit An- und Abschaltzeiten zum Schalten der Detektor-Anordnung mit mehreren Schaltvorgängen innerhalb einer Belichtungszeit;
- Fig. 5: eine schematische Darstellung der Anordnung eines Zählers, der durch einen Teil eines Sendestrahls getriggert ist und einer Schalteinrichtung zum Schalten der Detektor-Anordnung einen Schaltimpuls zuführt;
- Fig. 6a: eine schematische Darstellung eines Ausführungsbeispiels für einen Detektor mit vorgesetztem Schalter;
- Fig. 6b: eine schematische Darstellung eines weiteren Ausführungsbeispiels für einen Detektor mit einem CCD-Array und mit einer Mikrokanalplatte als Schalter;
- Fig. 7: ein schematisches Diagramm zur Veranschaulichung eines Beispiels der Wahl von Schaltzeiten T1 und T2 bei unterschiedlichen Ziel-Messparametern;
- Fig. 8: eine schematische Darstellung einer beispielhaften Anordnung zur wahlweisen Messung des direkten Laserstrahls als Referenz oder des atmosphärischen Rückstreusignals bei entsprechender Wahl der Zeiten T1 und T2; und
- Fig. 9: eine schematische Darstellung von Schaltflanke τ zum Aktivieren und/oder Deaktivieren des Detektors.

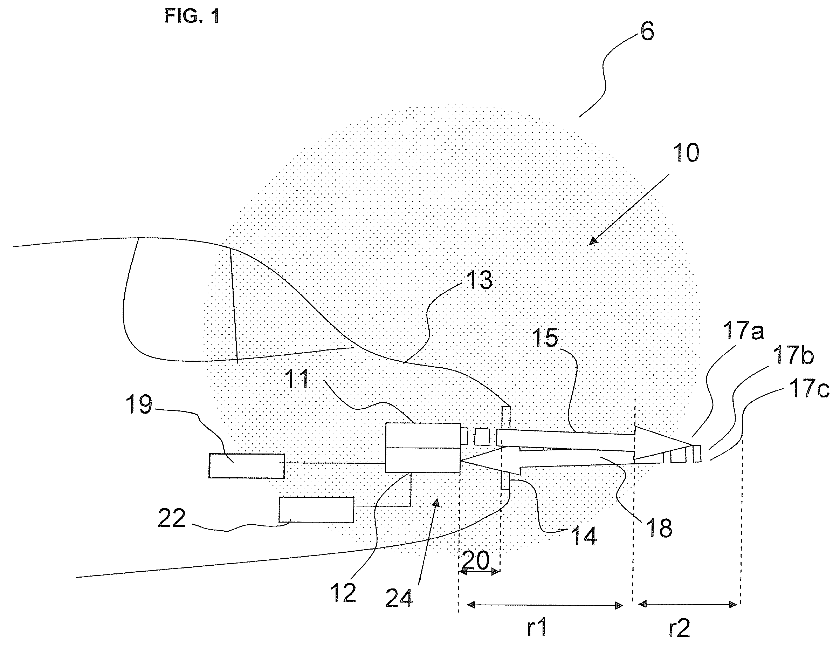

Fig. 1 zeigt eine schematische Darstellung einer Direktempfang-Doppler-LIDAR-Vorrichtung 10. Die Direktempfang-Doppler-LIDAR-Vorrichtung 10 ist in dem dargestellten Beispiel in einem Luftfahrzeug, dargestellt am Beispiel eines Flugzeuges 13, als Träger eingebaut.

Die Direktempfang-Doppler-LIDAR-Vorrichtung 10 weist eine Laserquelle 11 mit relativ schmaler Bandbreite (Einfrequenzbetrieb, typischerweise einige kHz bis MHz Linienbreite) auf. Das Licht der Laserquelle 11 - ausgesendeter Laserstrahl 15 - wird durch ein Fenster 14 in die Atmosphäre 16 gesendet. In der Atmosphäre 16 wird das Licht der Laserquelle 11 an Teilchen 17a, 17b, 17c, ... der Luft in dem hier beispielhaft dargestellten Fall elastisch gestreut. Das Streulicht 18 wird von einer Detektor-Anordnung 12 aufgenommen. In einer Auswerteeinrichtung 19 wird aus der Dopplerverschiebung des an den Streupartikeln - Teilchen 17a, 17b, 17c - , welche sich relativ zur Direktempfang-Doppler-LIDAR-Vorrichtung 10 bewegen, rückgestreuten Streulichts 18 die Relativgeschwindigkeit bestimmt.

Weiter ist eine Schalteinrichtung 24, beispielsweise vor dem Detektor, zum Umschalten zwischen einem Aktiv-Zustand, in dem Licht detektiert werden kann, und einem Inaktiv-Zustand, in dem Licht nicht detektiert werden kann, vorgesehen. Weiter ist eine Steuereinrichtung 22 vorgesehen, mittels der die Schalteinrichtung 24 abhängig von der Aussendung eines Laserpulses durch die Laserquelle 11 gesteuert werden kann.

Das Fenster 20 ist ein für die verwendete Strahlung optisch durchlässiges Element zum Abdecken der Direktempfang-Doppler-LIDAR-Vorrichtung 10 gegenüber Umwelteinflüssen (Abdeckelement) und befindet sich in einem bestimmten Abstand 20 von der Laserquelle 11 und der Detektor-Anordnung 12.

Bei der Streuung an den Teilchen 17a, 17b und 17c unterscheidet man in diesem Zusammenhang einerseits die Streuung an Molekülen der Luft (Rayleigh-Streuung) und die Streuung an Aerosolen (Staubpartikel, Salzpartikel etc., Mie-Streuung). Die Rayleighstreuung kann zuverlässig in allen atmosphärischen Schichten und unabhängig von meteorologischen Einflüssen gemessen werden; sie ist nur abhängig von der Teilchendichte, welche kontinuierlich zu größeren Höhen abnimmt. Dagegen ist die Streuung an Aerosolen sehr stark von deren lokaler Dichte abhängig, die örtlich und insbesondere in Abhängigkeit von Wettereinflüssen und anderen Einflüssen stark variieren kann.

Beispielsweise ist die Aerosolstreuung sehr stark in Gebieten mit hoher Schadstoffemission, wie beispielsweise in Industriegebieten oder vulkanischen Gebieten. Dagegen ist die Aerosolstreuung recht niedrig im Bereich von großen Gewässern, beispielsweise über den Ozeanen oder im Bereich der südlichen Hemisphäre der Erde. Insbesondere werden die Aerosole aber auch durch beispielsweise starken Regen ausgewaschen, so dass deren Konzentration dann sehr gering sein kann.

Insgesamt nimmt die auf der Aerosoldichte beruhende Mie-Streuung überproportional gegenüber der Rayleighstreuung an Molekülen der Luft ab. Für eine zuverlässige Messung von Turbulenzen etc. ist daher eine rein auf Aerosolen beruhende Messung nicht geeignet, vielmehr sollte die Rayleighstreuung auch gemessen werden können.

Da die Intensität der Rayleighstreuung proportional dem Kehrwert der Wellenlänge zur vierten Potenz ist, verwendet man sinnvollerweise eine Laserquelle 11 bei möglichst kurzer Wellenlänge, also beispielsweise im UV-Bereich.

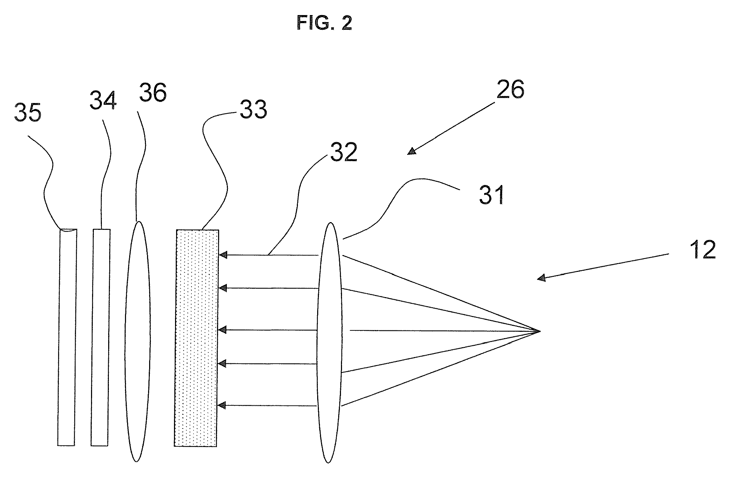

Ein Beispiel für die Detektor-Anordnung 12 der Direktempfang-Doppler-LIDAR-Vorrichtung 10 ist in Fig. 2 näher dargestellt. Die gestreute Strahlung - Streulicht 18 - wird über eine Optik 26 auf einen Detektor 35 geleitet und detektiert.

Zur Messung einer Frequenzverschiebung sind prinzipiell zwei Messmethoden denkbar. Bei einer Messmethode, der sogenannten kohärenten Detektion, wird die feste Phasenbeziehung zwischen dem ausgesandten Laserstrahl hinreichend schmaler Linienbreite und der empfangenen Streustrahlung ausgenutzt. Aufgrund der Kohärenz ist dieses Messverfahren sehr empfindlich. Zur Messung der Frequenzverschiebung wird ein Teil des Laserstrahls vor Aussendung in die Atmosphäre umgeleitet, zeitverzögert und kollinear mit der empfangenen Streustrahlung auf einem Photodetektor hinreichend großer Bandbreite gemischt. Aufgrund der Nichtlinearität des Photodetektors kann die Differenzfrequenz als elektrisches Signal direkt abgegriffen werden, welche direkt der Dopplerverschiebung entspricht und daher der Relativgeschwindigkeit proportional ist.

Voraussetzung für diese Meßmethode ist eine hinreichend schmalbandige Laserquelle, so dass die Kohärenzlänge des Lichts größer als die Wegdifferenz zwischen verzögerter Referenzstrahlung und empfangener Streustrahlung ist. Weiter darf die Streustrahlung selbst aber zu keiner wesentlichen Linienverbreiterung beitragen, da ansonsten die Kohärenz zerstört würde. Typische Grenzwerte für die maximale Linienbreite sowie Verbreiterung bei Streuung liegen im Bereich einiger MHz.

Nun ist die an Aerosolen gestreute Strahlung zwar nahezu gleich schmalbandig wie die einfallende Strahlung, dies gilt jedoch nicht für die an Molekülen gestreute Strahlung: Aufgrund der Boltzmannverteilung der Partikelgeschwindigkeiten bewegen sich die sehr leichten Moleküle bei üblichen Temperaturen weit über dem absoluten Nullpunkt mit hoher Geschwindigkeit (Brown'sche Molekularbewegung), welche zu einer erheblichen Dopplerverbreiterung alleine aufgrund dieses Effektes führt. Typische Werte liegen im Bereich um 3 GHz. Eine kohärente Detektion gemäß des oben beschriebenen Verfahrens (Mischung auf einem Photodetektor) ist daher für eine Messung der Rayleighstreuung nicht möglich.

Zur Messung der Rayleighstreuung (Streuung an Molekülen) wird daher bei dem hier dargestellten Verfahren und bei der hier dargestellten Direktempfang-Doppler-LIDAR-Vorrichtung 10 die in Fig. 2 dargestellte sogenannte Direktempfangstechnik verwendet, welche die Phase der Strahlung nicht benötigt und lediglich eine Intensitätsmessung vornimmt. Um die Doppler-Frequenzverschiebung zu bestimmen, ist ein weiteres Element - zum Beispiel ein Fabry-Perot-Interferometer, Etalon, anderes Interferometer etc. 33 - vorgesehen, welches eine Frequenzdiskriminierung oder Wellenlängen-Dispersion aufweist.

Bei der in Fig. 2 dargestellten Detektor-Anordnung 12 wird hierzu die empfangene Strahlung 32 der Detektor-Anordnung 12 zugeführt. Die empfangene Strahlung 32 wird über eine erste Optik - Kollimationsoptik 31 - einem sogenannten Fabry-Perot-Etalon 33, welches zwei planparallele, teilreflektierende Platten oder eine einzelne planparallelen Platte mit Teilreflexion auf beiden Oberflächen aufweist, zugeführt, welches durch Selbstüberlagerung der Welle in einem Resonator zu einer Interferenz der Welle mit sich selbst führt.

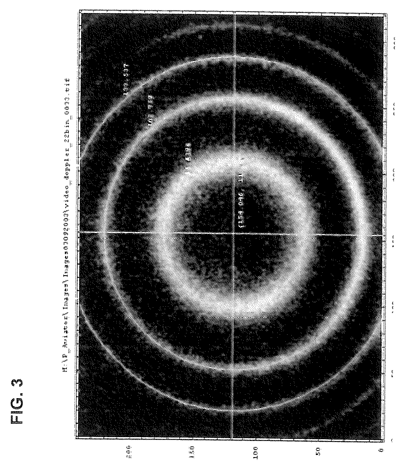

Auf diese Weise entsteht durch Abbildung mittels einer zweiten Optik 36 auf den Detektor 35 eine räumliche Intensitätsverteilung. In dem dargestellten Beispiel entsteht durch Vielfachreflexion eine kreisförmige Interferenzfigur - sogenannte Ringe oder engl. Fringes, siehe Fig. 3. Maxima und Minima entsprechen dabei jeweils Überlagerungen gleichen Winkels. Eine Änderung des Radius dieses Interferenzmusters von Fig. 3 ist direkt proportional der Änderung der Wellenlängen bzw. Frequenzänderung des detektierten Signals und damit der Änderung der Dopplershift und somit der Änderung der Relativgeschwindigkeit der Streupartikel, also beispielsweise der streuenden Teilchen 17a, 17b, 17c der Luft (Moleküle, Aerosole) gegenüber dem Messsystem. Beispielsweise lässt sich damit bei flugzeuggetragenen Systemen auch die Relativgeschwindigkeit der Luft in Bezug auf das Flugzeug 13 bestimmen.

Vergleicht man die Radien des Interferenzmusters beispielsweise mit einem gleichzeitig oder zu einem anderen Zeitpunkt gemessenen Signal des direkt abgeleiteten Lasersignals, so kann auch die absolute Relativgeschwindigkeit (im Unterschied zur vorher beschriebenen Änderung der Relativgeschwindigkeit) bestimmt werden. Erfolgt diese Messung gleichzeitig oder hintereinander in unterschiedliche Raumrichtungen (Aussenden des Laserstrahls in unterschiedliche Raumrichtungen und Messung der Rückstreuung daraus), so kann der zwei- oder auch dreidimensionale relative Geschwindigkeitsvektor bestimmt werden. Entsprechend können die hier vorgeschlagenen Prinzipien und Lösungen für eine oder mehrere Messrichtungen angewandt werden.

Dieses in Fig. 3 als Beispiel dargestellte Interferenzmuster ist nun mit einem geeigneten Detektor aufzunehmen.

Die Detektoranordnung 12 kann unterschiedlich aufgebaut sein. Verschiedene Lösungen beinhalten die Verwendung von Filtern an den Kanten der Interferenzmaxima mit nachgeordneten Photodetektoren, dem Interferenzmuster nachempfundene konzentrische Ringelektroden eines Photomultipliers, die Umformung des kreisförmigen Musters in ein lineares mittels beispielsweise Faseroptik und Detektion mit einem CCD-Zeilendetektor oder die Detektion mit einem zweidimensionalem Photo-Detektor (beispielsweise CCD-Kamera). Für die dargestellte Direktempfang-Doppler-LIDAR-Vorrichtung 10 sind alle diese Detektoren und auch andere geeignet. Der Einfachheit halber wird die Direktempfang-Doppler-LIDAR-Vorrichtung 10 sowie ein damit durchführbares Messverfahren jedoch am Beispiel der Verwendung einer CCD-Kamera als Detektor 35 (siehe Fig. 2) mit einer vorgeschalteten Mikrokanalplatte 34 zur Verstärkung weiter beschrieben. Die Mikrokanalplatte 34 ist in einigen Ausführungsformen auch als Schalter verwendet.

Nun beträgt die Lichtlaufzeit n*r/c, also Brechungsindex n mal Strecke r durch Vakuum-Lichtgeschwindigkeit c. Im beschriebenen Falle eines sogenannten monostatischen Systems, bei welchem Sender - hier: Laserquelle 11 - und Empfänger - hier: Detektor-Anordnung 12 - sich in ähnlicher Position befinden und Rückstreuung zur LIDAR-Messung verwendet wird, beträgt die Lichtlaufzeit das Doppelte hieraus, also 2 x n x r/c. Es kann also sehr exakt berechnet werden, nach welcher Zeit der Aussendung eines Lichtimpulses dieser aus einer definierten Entfernung wieder empfangen wird.

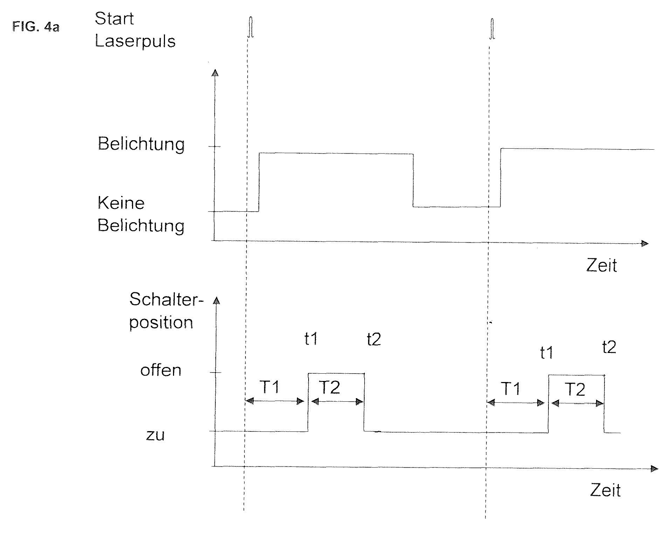

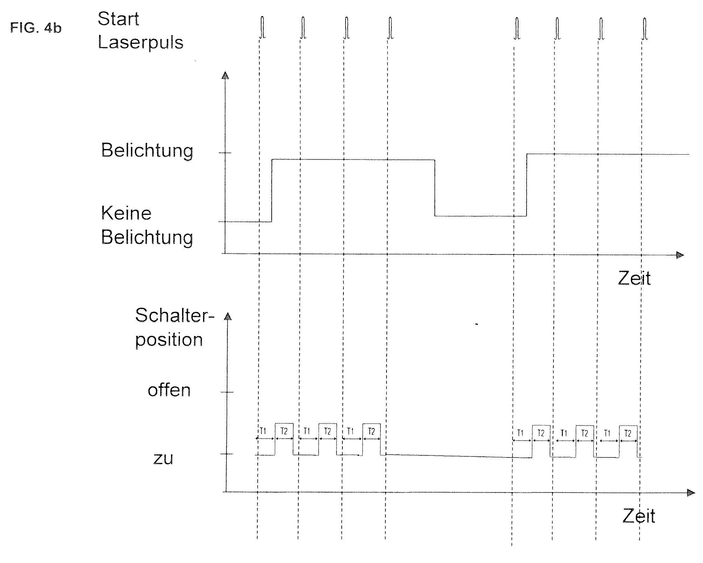

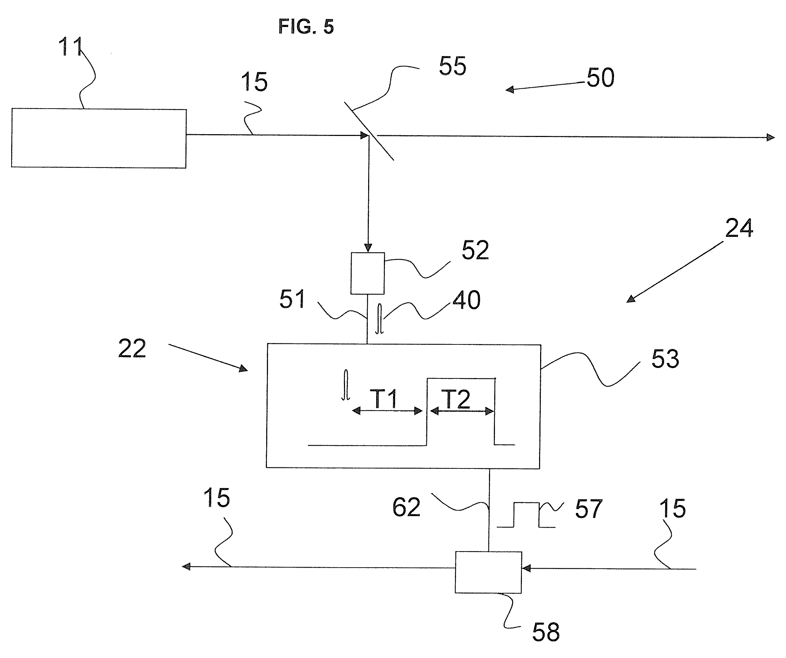

Wie in den Fig. 4a und 4b veranschaulicht, wird bei der hier beschriebenen Direktempfang-Doppler-LIDAR-Vorrichtung 10 und dem damit durchführbaren Messverfahren der Detektor 35 zuvor frühzeitig eingeschaltet ("Belichtung"). Durch z.B. die als Schalter fungierende Mikrokanalplatte 34 wird die gesamte Detektoranordnung 12 jedoch nun im Regelfall deaktiviert und erst nach einer ersten Zeitdauer T1 nach Aussenden eines Laserpulses 40 (Fig. 5), zu einem Einschaltzeitpunkt t1, aktiviert, so dass das Streulicht 18 erst aus einer Entfernung (Messentfernung) von mindestens r1= c*T1/2*n detektiert wird entsprechend der ersten Zeitdauer T1, die das Licht von der Strahlquelle bis zum Beginn des gewünschten Messvolumens und gegebenenfalls zurück zum Detektor benötigt. In Fig. 1 ist der Einfachheit halber eine Strahlausbreitungsrichtung oder Messrichtung parallel zur Flugrichtung skizziert. Wird unter einem Winkel α zur Flugrichtung gemessen, so ist die erste Zeitdauer T1, sowie eine zweite Zeitdauer T2, innerhalb der die Detektoranordnung aktiv geschaltet ist (zwischen dem Einschaltzeitpunkt t1 und einem Ausschaltzeitpunkt t2) durch cos α zu teilen, um die Entfernung r vor dem Flugzeug zu errechnen. Soll r1, r2 nicht die Entfernung vor dem Flugzeug, sondern die Entfernung zwischen LIDAR und Messvolumen bezeichnen, so entfällt diese Teilung.

Weiter kann, wie ebenfalls aus Fig. 4a ersichtlich, bei dem hier dargestellten Messverfahren sowie der entsprechend ausgebildeten Direktempfang-Doppler-LIDAR-Vorrichtung 10 die Detektoranordnung 12 nach der zweiten Zeitdauer T2, zu dem Ausschaltzeitpunkt t2, wieder deaktiviert werden, während der Detektor 35 noch im Zustand "Belichtung" ist" so dass lediglich das Streulicht 18 in der Entfernung zwischen r1=c*T1/2*n und r2=c*(T1+T2)/2*n (Messtiefe) (vergleiche auch Fig. 1) detektiert wird und so die maximale Messentfernung r2, die das Licht von der Strahlquelle bis zum Ende des gewünschten Messvolumens und gegebenenfalls zurück zum Detektor 35 benötigt, in Abhängigkeit von Messparametern wie beispielsweise der erforderlichen Intensität des detektierten Signals eingestellt werden kann, wobei der Detektor weiter im Zustand "Belichtung" ist. Das Ein- und Abschalten erfolgt mittels der Schalteinrichtung 24.

Wird beispielsweise eine CCD-Kamera als Detektor 35 verwendet, welche bei einer Bildrate von 60 Bilder pro Sekunde eine typische Belichtungszeit von 16 ms aufweist, wird dieses Bild nur mit einem Bruchteil dieser Zeit tatsächlich belichtet. Dies ist in Fig. 4a, 4b näher dargestellt, wo in der obigen Darstellung die Belichtungszeiten für die CCD-Kamera dargestellt sind und unten die Zeitdauern T1, T2 und Zeitpunkte t1, t2 (Fig. 4a) für die Schalteinrichtung. Die Belichtung erfolgt damit genau so, dass nur das in gewünschten Entfernung gestreute Licht detektiert wird, siehe Fig. 4a, 4b. Zusätzlich strahlt auch nur während dieser kurzen Zeit Hintergrundlicht ein. Auf dieses Weise wird aber nur ein vergleichsweise geringer Teil der Hintergrundstrahlung detektiert, während bei ständig geöffneter Detektoranordnung 12 während der gesamten Belichtungszeit von 16 ms Hintergrundlicht aufgenommen würde

Fig. 4b zeigt den Fall der Detektion von mehreren Laserpulsen (in diesem Beispiel vier) während einer einzigen (Kamera- oder Detektor-)Belichtungszeit. Entsprechend der Zahl aufzunehmender Laserpulse wird das Schalten mit den Zeitdauern T1 und T2 entsprechend oft durchgeführt. Hier zeigt sich deutlich der Vorteil, dass durch Abschalten der Detektoranordnung nach der zweiten Zeitdauer T2 mit einer Dauer T1+x bis zur Detektion des nächsten Laserpulses entsprechend weniger Hintergrundlicht (in den Zeiträumen n z* T1+x) aufgenommen und die Signalqualität damit deutlich verbessert wird, während mehrere Pulse so zu einer einzigen Gesamtmessung (Belichtungszeit) aufintegriert werden.

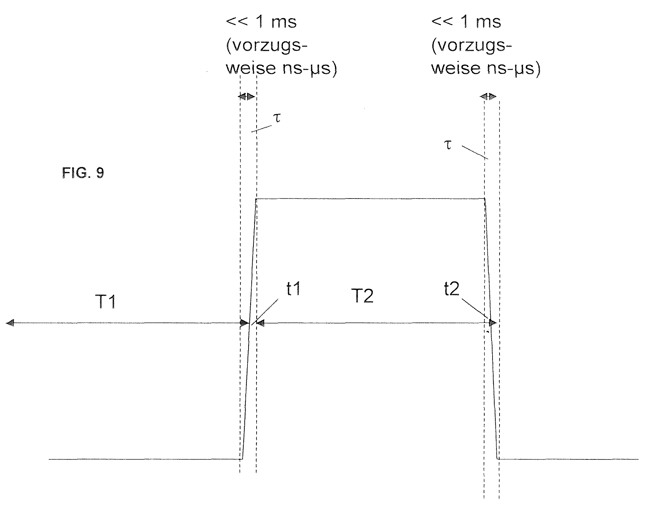

Hierbei ist vorteilhaft, wenn die Schaltzeit τ zum Aktivieren und/oder Deaktivieren der Detektoranordnung 12 möglichst gering ist. Diese Schaltzeiten τ (Flanken) sind in Fig. 9 näher dargestellt. Insbesondere sollte diese Schaltzeit τ sehr viel kleiner 1 Millisekunde betragen, vorzugsweise im Bereich von Nanosekunden oder Mikrosekunden. Dies lässt sich z.B. durch ein entsprechend schnelles Schaltelement der Schalteinrichtung 24, zum Beispiel einen dem Detektor 35 vorgeschalteten Schalter, oder durch ein z.B. elektrisches Schalten am Ausgang des Detektors 35 erreichen. Eine beispielhafte Anordnung der Schalteinrichtung 24 ist in Fig. 5 näher dargestellt, auf die im folgenden Bezug genommen wird.

Fig. 5 zeigt die Laserquelle 11 mit dem Sendestrahl - ausgesendeter Laserstrahl 15 - und einer Auskoppeleinrichtung 50 zum Auskoppeln eines Teils des Laserstrahls 15 auf einen Photodetektor 52: Der Photodetektor ist über eine Eingangsschnittstelle 51 mit einem Zähler 53 verbunden. Weiter ist der Zähler 53, der Teil der Steuereinrichtung 22 zur Zeitsteuerung des Aktivierens/Deaktivierens der Detektoranordnung 12 ist, und ein Schaltelement der Schalteinrichtung 24, hier in Form eines Schalters 58 dargestellt, der im Weg des zu dem Detektor 35 gerichteten zu detektierenden Streulichts 18 angeordnet ist. Der Schalter 58 könnte durch die Mikrokanalplatte 34 oder durch einen anderen Schalter gebildet werden.

Die Triggerung des An- und Abschaltens erfolgt durch eine geeignete Uhr oder den Zähler 53 oder andere geeignete Mittel, welche ihrerseits einen Eingang zur Detektion des ausgestrahlten Laserpulses 40 haben. In dem dargestellten Beispiel hat der Zähler 53 eine Eingangsschnittstelle 51 mit dem Photodetektor 52, der einen kleinen Bruchteil des ausgesendeten Laserstrahls 15 empfängt. Hierzu ist die Auskoppeleinrichtung 50 mit einem durch schräggestellten Fenster 55 versehen, durch welches der Bruchteil ausgekoppelt wird. Alternativ kann die Auskoppelvorrichtung Streulicht am Austrittsfenster oder an einem Auskoppelspiegel der Laserquelle 11 usw. ausnutzen.

Von der Eingangsschnittstelle 51 wird ein entsprechend aufbereitetes elektrisches Ausgangssignal dem Zähler 53 zugeführt, so dass die erste Zeitdauer T1 auf diesen Zeitpunkt der Aussendung des Laserpulses 40 bezogen werden kann.

Der Zähler 53 führt ein Schaltsignal 57 dem Schalter 58 an dessen Eingang 62 zu. Der Schalter 58 ist im Empfangsstrahl - Streulicht 18 - angeordnet und lässt diesen je nach Schaltzustand zu dem Detektor 35 durch oder nicht.

Typische Detektoren 35 sind wie zuvor erwähnt Kameras, beispielsweise CCD-Kameras oder vergleichbare, also auch beispielsweise CMOS-Kameras, sowie aus Detektor und schaltbarer Mikrokanalplatte gebildete sogenannte intensivierte Kameras. Weitere mögliche Detektorprinzipien beinhalten 2D-Photodetektor-Arrays, Zeilenarrays von Photodetektoren, Photomultiplier mit konzentrisch angeordneten Ringelektroden oder andere 1- oder 2D- Anordnungen von Photodetektoren oder auch Einzeldetektoren.

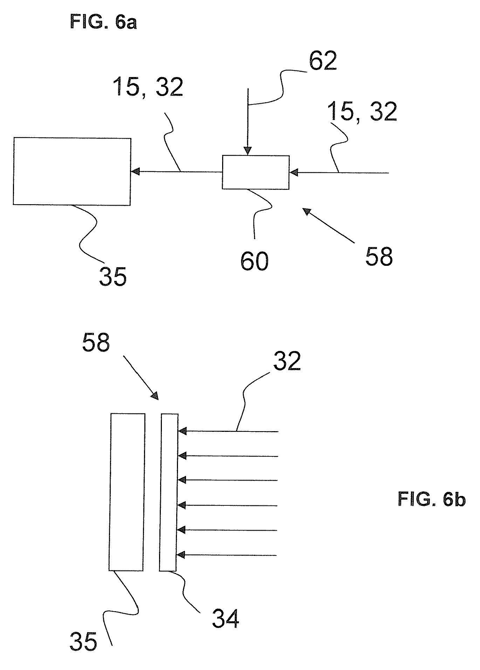

Wie in den Fig. 6a und 6b vergleichend dargestellt können als "Schalter 58" zum An- und Abschalten des Detektors 35 verschiedene Anordnungen verwendet werden:
Fig. 6a zeigt eine in den Strahlengang gestellte Schalteinheit 60, die als mechanischer Verschluss, insoweit er die Anforderungen an die kurzen Schaltzeiten τ von kleiner 1 ms, vorzugsweise im Bereich von Nano- oder Mikrosekunden, erfüllt, oder als elektrooptischer Schalter (zum Beispiel elektrooptische LiNbO3), als akustooptischer Schalter, faseroptischer Schalter, als Flüssigkristall-Zelle, mikromechanischer Schalter (zum Beispiel Mikrospiegel oder Mikrospiegel-Arrays) oder als elektrischer Schalter ausgebildet sein kein. Geeignet für die Schalteinheit 60 sind insbesondere solche Schalter 58, die über den Ansteuereingang 62 verfügen und in der Lage sind, den Detektor 35 bzw. den Lichteinfall im Empfangspfad vor dem Detektor 35 entsprechend schnell zu schalten.

Ein anderer, hier nicht näher dargestellter, zum Bilden der Schalteinrichtung 24 in entsprechender Weise ebenfalls geeigneter Schalter ist vergleichbar zu der Schalteinheit 60 aufgebaut, jedoch an dem Detektor 35 anschließbar und in der Lage, den Detektor 35 bzw. dessen Ausgang entsprechend schnell kurzzuschließen (beispielsweise vor der Belichtung).

Bei Verwendung von CCD-Kameras wie in Fig. 6b dargestellt werden insbesondere auch schaltbare Mikrokanalplatten 34 (Microchannel-Plates) eingesetzt, welche ein entsprechend schnelles Schalten über eine größere Fläche (wie für einen CCD-Chip erforderlich) ermöglichen. Derartige schnell schaltbaren Mikrokanalplatten 34 können entweder durch Ansteuerung der Beschleunigungsspannung, oder vorzugsweise durch Ansteuerung einer Gate-Elektrode, meist eine netzförmige Elektrode auf der Photokathode, oder durch beides zugleich geschaltet werden, typisch im Bereich von Nanosekunden.

Es können jedoch auch eine ganze Reihe anderer Schalter eingesetzt werden, solange sie ein entsprechend schnelles Schalten ermöglichen.

Die einem minimalen Messvolumen r2-r1 entsprechende zweite Zeitdauer T2, die das Licht zum Durchlaufen des Messvolumens und gegebenenfalls zurück benötigt, kann nun in Abhängigkeit von Systemparametern wie beispielsweise Fluggeschwindigkeit eines Flugzeugs 13, in welchem die Direktempfang-Doppler-LIDAR-Vorrichtung 10 montiert ist, oder sonstiger die erforderliche Messentfernung beeinflussender Parameter eingestellt werden, wobei die Zeitdauern T1 und T2 oder Zeitpunkt t1, t2 entweder fest vorgegeben oder dynamisch während eines länger dauernden Messeinsatzes gesteuert oder geregelt werden können (beispielsweise T1 kürzer bei geringeren Fluggeschwindigkeiten und länger bei größeren Fluggeschwindigkeiten, so dass die Zeit zwischen Messung und "Durchfliegen" des Messvolumens konstant ist).

Weiter kann die einem minimalen Messvolumen r2-r1 entsprechende zweite Zeitdauer T2, die das Licht zum Durchlaufen des Messvolumens und gegebenenfalls zurück benötigt, ebenfalls in Abhängigkeit von Messparametern wie beispielsweise der erforderlichen Intensität des detektierten Signals eingestellt werden (beispielsweise T2 kleiner bei geringer Rückstreuintensität, damit Kompensation durch größeres Rückstreuvolumen, oder T1 kleiner bei geringer Rückstreuintensität und damit ebenfalls Kompensation durch geringeren Messabstand).

Eine andere Möglichkeit besteht nun darin, die einem minimalen Messvolumen r2-r1 entsprechende zweite Zeitdauer T2, die das Licht zum Durchlaufen des Messvolumens und gegebenenfalls zurück benötigt, in Abhängigkeit von Systemparametern wie beispielsweise der erwarteten Dynamik des Messsignals, Kohärenz oder Gradient einer gemessenen oder zu messenden Luftböe etc. anzupassen.

Insbesondere kann nun aufgrund des hier vorgestellten Verfahrens die Einstellung der Zeit dynamisch während eines länger dauernden Messeinsatzes gesteuert oder geregelt werden, oder aber fest vorgegeben werden, je nach Erfordernis der Messung und der Einbindung in das Gesamtsystem.

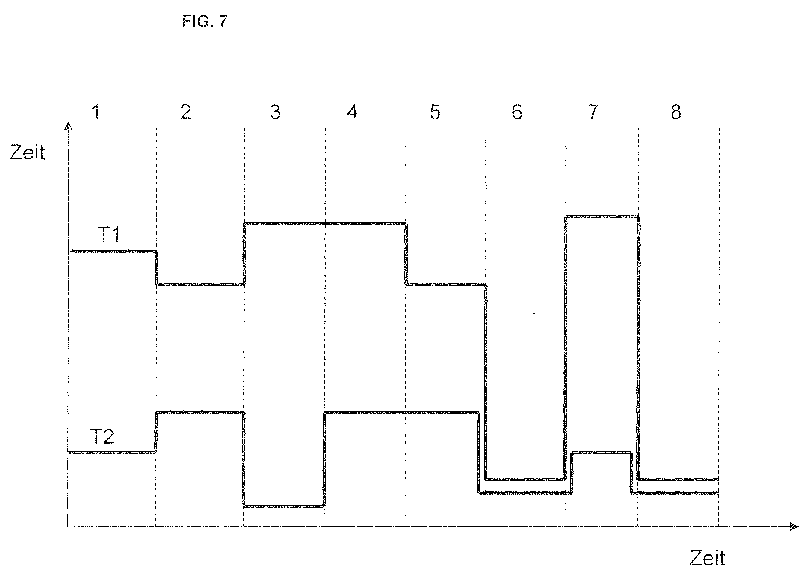

Wie in Fig. 7, auf die im folgenden Bezug genommen wird, veranschaulicht, kann beispielsweise die Einstellung der Zeitdauern T1 und T2 auch nach Erfordernis oder sequentiell zur Erfüllung unterschiedlicher Messaufgaben erfolgen. Fig. 7 zeigt hierbei eine längere Messsequenz mit mehreren Einzelmessungen in den Abschnitten 1 bis 8.

Beispielsweise kann bei der flugzeuggetragenen Direktempfang-Doppler-LIDAR-Vorrichtung 10 eine große Messentfernung für Sicherheit/Komforterhöhung eingestellt sein, wie dies bei den Abschnitten 3 und 4 in Fig. 7 dargestellt ist. Hierzu ist die erste Zeitdauer T1 groß eingestellt, so dass nur Entfernungen r1 in relativ großem Abstand erfasst werden. Streulicht aus allen näheren Abschnitten erreicht vor dem eingestellten Einschaltzeitpunkt t1 den Detektor 35 und wird somit nicht erfasst. In den Abschnitten 2 und 5 der Fig. 7 ist dagegen eine kurze Messweite mit erhöhter Genauigkeit zur Flügellastreduktion eingestellt. Dies geschieht durch Einstellung der ersten Zeitdauer T1 auf einen kürzeren Wert. In den Abschnitten 6 und 8 von Fig. 7 ist eine ganz kurze Reichweite zur optischen Messung von Luftdaten durch eine entsprechende Auswahl einer kleinen ersten Zeitdauer T1 eingestellt. Diese unterschiedlichen Einstellung können nacheinander automatisch, beispielsweise in einer vorbestimmten Reihenfolge oder auf Anforderung eingestellt werden.

Wie gezeigt lässt sich auch die Messtiefe diesen Anforderungen anpassen. Beispielsweise wird eine große Messtiefe bei großer Entfernung, d.h. auf T2 groß gesetzt, wie in Abschnitt 4 von Fig. 7 angegeben, oder eine kleine Messtiefe bei kurzer Entfernung, wie in Abschnitt 1 angegeben, eingestellt. Abschnitt 3 zeigt eine beispielhafte Einstellung der zweiten Zeitdauer T2 bei großer Entfernung aber starker Rückstreuung beispielsweise in Wolken. Abschnitt 1 beschreibt in Relation hierzu die normalen Messbedingungen.

Eine weitere Möglichkeit besteht darin, die erste Zeitdauer T1 in Fig. 4b innerhalb einer Belichtung so von Laserpuls zu Laserpuls zu verkürzen, dass das Messvolumen trotz der Eigenbewegung des Flugzeugs 13 im luftbezogenen äußeren Koordinatensystems für jeden aufgenommenen Laserpuls konstant bleibt. Andernfalls würde sich das Messvolumen von Laserpuls zu Laserpuls entsprechend der Flugzeugbewegung verschieben.

Weiter wird durch ein Aktivieren und Deaktivieren der Detektoranordnung 12 derart, dass die erste Zeitdauer T1 größer ist als die Zeit, die das Licht für die Strecke - Abstand 20 - in Fig. 1 von der Laserquelle bis zu dem Fenster 14 und wieder zurück zum Detektor 35 benötigt, ein möglicher Reflex an diesem Fenster 14 oder einer sich darauf befindlichen (Schmutz)schicht nicht vom Detektor 35 wahrgenommen. Dies ist besonders vorteilhaft, da Streulicht am Austrittsfenster durch Oberflächenstreuung oder Verschmutzung wesentlich intensiver als das zu detektierende Nutzsignal sein kann und somit eine einwandfreie Detektion des Nutzsignals je nach Umständen extrem stören könnte. Durch die hier beschriebene Direktempfang-Doppler-LIDAR-Vorrichtung 10 und das hier beschriebene Messverfahren kann aber genau dies unterdrückt werden.

In einem wie oben beschriebenen LIDAR-System soll oftmals nicht nur die Änderung der Geschwindigkeit, sondern die Geschwindigkeit selbst gemessen werden. Hierzu wäre die Messung der zeitliche Änderung des Interferenzsignals alleine noch nicht ausreichend. Zum Beispiel wird zur Messung der Geschwindigkeit selbst die Änderung des Interferenzsignals in Bezug auf einen Bezugspunkt (zum Beispiel bekannte Geschwindigkeit oder Geschwindigkeit gleich Null) gemessen. Eine Möglichkeit unter Verwendung der hier dargestellten Direktempfang-Doppler-LIDAR-Vorrichtung 10 besteht im wesentlichen darin, einen Teil des ausgesandten Laserlichts - Laserstrahl 15 - direkt (d.h. ohne Aussenden in die Atmosphäre) in die Detektor-Anordnung 12 zu koppeln. Da dieser Teil des Laserlichts keine Streuung an relativ zum System bewegten Partikeln - Teilchen 17a, 17b, 17c - erfährt, beträgt hier die Dopplerverschiebung 0. Das Signal kann damit als Nullpunkts-Referenzsignal verwendet werden.

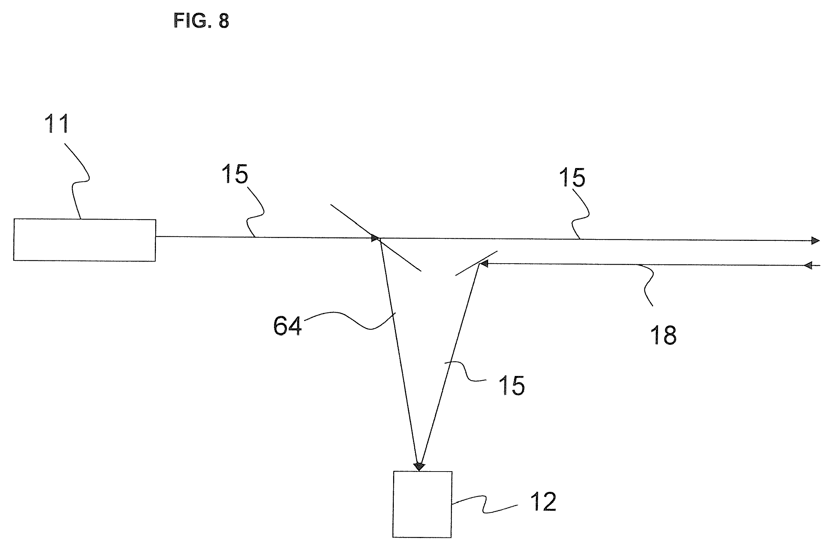

In Fig. 8 wird eine Ausführungsform der Direktempfang-Doppler-LIDAR-Vorrichtung 10 verdeutlicht, bei der dieses Signal nun so gewonnen wird, dass ein Teil - Lasersignal 64 - des von der Laserquelle 11 ausgesandten Signals - Laserstrahl 15 - auf die Detektoranordnung 12 geleitet wird und die erste Zeitdauer T1 nun relativ zur Messung in der Luft relativ kurz so gewählt wird, dass dieses Lasersignal 64 auf dem Detektor 35 registriert wird. Soll das Lasersignal 64 als Referenzsignal gemessen werden, können die Zeitdauern T1 und T2 nun gerade so gewählt werden, dass T1+T2 kleiner ist als die Zeit, bis das Laserlicht - Streulicht 18 - aus der Atmosphäre empfangen wird. Durch Wahl von T1 und T2 kann so ausgewählt werden, ob das Referenzsignal oder das Atmosphärensignal detektiert wird.

Umgekehrt kann das Referenzsignal auch beispielsweise mittels einer Faserspule derart verzögert werden, dass durch die Wahl einer entsprechend angepassten ersten Zeitdauer T1 das von der Atmosphäre rückgestreute Signal dadurch unterdrückt wird, dass dieses nur aus einer sehr großen Messentfernung und damit nur äußerst (vernachlässigbar) schwach ist, das zeitverzögerte Referenzsignal aber gerade optimal detektiert wird.

Aus praktischen Gründen kann es sinnvoll sein, zuzüglich die Strecke für die Rückstreusignale - Streulicht 15 - aus der Atmosphäre 16 künstlich dadurch zu verlängern, dass in diesen Empfangspfad eine Faserspule eingebracht wird, so dass das Atmosphärensignal deutlich getrennt vom Referenzsignal auf den Detektor 35 trifft und somit die beschriebene Auswahl der Signale durch entsprechende Wahl der Zeitdauern T1 und T2 leichter ermöglicht wird.

Die vorbeschriebene Lösung kann bei Messung mehrerer Messrichtungen für jede diese Richtungen angewandt werden, oder nur für einzelne, so dass ein Referenzsignal als Referenz für die jeweils anderen Messrichtungen verwendet wird.

Diese Messung des Referenzsignals kann nun periodisch oder zufällig im gesamten Messzyklus der LIDAR-Messung erfolgen, wobei entsprechend die Schaltzeiten des Detektors 35 periodisch oder zufällig geändert werden.

### Bezugzeichenliste:

- 10: Direktempfang-Doppler-LIDAR-Vorrichtung
- 11: Laserquelle
- 12: Detektor-Anordnung
- 13: Flugzeug
- 14: Fenster
- 15: ausgesendeter Laserstrahl
- 16: Atmosphäre
- 17a: Teilchen der Luft
- 17b: Teilchen der Luft
- 17c: Teilchen der Luft
- 18: Streulicht
- 19: Auswerteeinrichtung
- 20: Abstand
- 22: Steuereinrichtung
- 24: Schalteinrichtung
- 26: Optik
- 31: Kollimationsoptik
- 32: empfangene Strahlung
- 33: Fabry-Perot-Etalon
- 34: Mikrokanalplatte
- 35: Detektor
- 36: zweite Optik
- 40: Laserpuls
- 50: Auskoppeleinrichtung
- 51: Eingangsschnittstelle
- 52: Photodetektor
- 53: Zähler
- 57: Schaltsignal
- 58: Schalter
- 60: Schalteinheit
- 62: Eingang des Schalters
- 64: Lasersignal

## Patentansprüche

1. Verfahren zur LIDAR-Messung von Geschwindigkeiten, wobei ein Laserstrahl (15) auf das zu messende Medium (16) gerichtet wird und von dem Medium (16) daraufhin abgestrahlte Strahlung (18) mittels eines Detektors (35) gemessen wird, und wobei ein räumlicher Messbereich (r1, r2) durch Aktivieren des Detektors (35) nach einer ersten vorbestimmten oder geregelten Zeitdauer (T1) von weniger als etwa 500µs nach Absenden eines Laserpulses (40) auf das zu messende Medium (16) und Inaktivieren des Detektors (35) nach einer zweiten Zeitdauer (T2) eingestellt wird, umfassend die Schritte:
a) Aussenden eines Laserpulses (40) bei inaktivem Detektor (35),
b) Aktivieren des Detektors (35) zu einem vorbestimmten oder geregelten Einschaltzeitpunkt (t1) nach Aussenden des Laserpulses (40) derart, dass ein von dem Medium (16) nach Empfang des Laserpulses (40) gestreuter Strahlungsimpuls (18) empfangen werden kann, und
c) Inaktiv-Setzen des Detektors (35) zu einem vorbestimmten oder geregelten Ausschaltzeitpunkt (t2), wobei Schritt c) nach Schritt b) durchgeführt wird, und weiter umfassend:
Einstellen des vorbestimmten oder geregelten Einschaltzeitzeitpunktes (t1) entsprechend einer gewünschten Mindestmessentfernung (r1) von der Laserquelle (11) und
Einstellen der vorbestimmten oder geregelten zweiten Zeitdauer (T2) zwischen dem Einschaltzeitpunkt (t1) und dem Ausschaltzeitpunkt (t2) entsprechend einer gewünschten Messtiefe (r2-r1), wobei die zweite Zeitdauer (T2) weniger als etwa 1µs beträgt,
**gekennzeichnet durch**
Einschalten des Detektors zu Beginn einer Belichtungszeit und Aktivieren sowie Inaktivieren des Detektors mittels einer Schalteinrichtung während dieser Belichtungszeit, wobei das Schalten mit der ersten und der zweiten Zeitdauer mehrmals durchgeführt wird, um mehrere Laserpulse während einer einzigen Belichtungszeit zu detektieren,
wobei die Zeitdauern (T1, T2) und/oder der Zeitpunkte (t1, t2) abhängig von den folgenden Parametern geregelt werden:
• Mindestintensität des detektierten Signals, und
• Maximalintensität des detektierten Signals.

2. Verfahren nach Anspruch 1,
**dadurch gekennzeichnet,**
**dass** eine Umschaltzeit (τ) kürzer als etwa 1µs im Bereich von Nanosekunden ist.

3. Verfahren nach einem der voranstehenden Ansprüche,
**gekennzeichnet durch**
Einstellen oder Regeln der Zeitdauern (T1, T2) und/oder der Zeitpunkte (t1, t2) in Abhängigkeit von Messparametern und/oder Systemparametern.

4. Verfahren nach Anspruch 3,
**dadurch gekennzeichnet,**
**dass** die Zeitdauern (T1, T2) und/oder der Zeitpunkte (t1, t2) abhängig von wenigstens einem der folgenden Parameter eingestellt oder geregelt wird:
• Soll-Intensität des detektierten Signals,
• Bewegungsgeschwindigkeit einer LIDAR-Vorrichtung, mittels der das Messverfahren durchgeführt wird,
• erwartete Dynamik des Messsignals,
• Kohärenz und/oder Gradient einer gemessenen Strömung in dem Medium (16), insbesondere einer Luftböe bei Messung von Luftgeschwindigkeiten.

5. Verfahren nach einem der Ansprüche 3 oder 4,
**dadurch gekennzeichnet,**
**dass** wenigstens eine der Zeitdauern (T1, T2) und/oder der Zeitpunkte (t1, t2) während eines länger dauernden Messeinsatzes dynamisch automatisch gesteuert und/oder geregelt wird.

6. Verfahren nach einem der voranstehenden Ansprüche,
**dadurch gekennzeichnet,**
**dass** wenigstens eine Zeitdauer (T1, T2) und/oder wenigstens ein Zeitpunkt (t1, t2) zur Veränderung des räumlichen Messbereichs (r2-r1) für unterschiedliche Messaufgaben unterschiedlich ausgewählt, gesteuert, geregelt und/oder eingestellt wird.

7. Verfahren nach einem der voranstehenden Ansprüche,
**dadurch gekennzeichnet,**
**dass** die erste Zeitdauer (T1) bei einem bewegten Messsystem abhängig von der Geschwindigkeit des Messsystems von Messpuls zu Messpuls innerhalb eines Belichtungsvorganges verändert wird.

8. Verfahren nach einem der voranstehenden Ansprüche,
**dadurch gekennzeichnet,**
**dass** das Verfahren zur Vermessung von Luftgeschwindigkeiten von einem Luftfahrzeug aus durchgeführt wird und dass das Verfahren zur Sicherheit und Komforterhöhung mit größerer Messentfernung, zur Lastreduktion von Bauteilen des Luftfahrzeuges mit mittlerer Messentfernung mit höherer Genauigkeit und zur optischen Messung von Luftdaten mit kurzer Messentfernung durchgeführt und die wenigstens eine Zeitdauer (T1, T2) und/oder wenigstens eine der Zeitpunkte (t1, t2) entsprechend diesen Messaufgaben eingestellt werden.

9. Verfahren nach einem der voranstehenden Ansprüche,
**dadurch gekennzeichnet,**
**dass** ein Teil des Laserstrahls (15) als Lasersignal (64) zum Liefern eines Referenzsignals auf den Detektor (35) geleitet wird, wobei durch Änderung der Zeitdauern (T1, T2) eine Detektion des Referenzsignals und/oder eine Detektion der von dem Medium abgestrahlten Strahlung (18) ausgewählt wird.

10. Verfahren nach Anspruch 9,
**dadurch gekennzeichnet,**
**dass** eine Erfassung des Referenzsignals periodisch oder zufällig in einem jeweiligen Messzyklus der LIDAR-Messung erfolgt.

11. Verfahren nach einem der Ansprüche 9 oder 10,
**dadurch gekennzeichnet,**
**dass** das Referenzsignal vor Auftreffen auf den Detektor (35) über eine optische Verzögerungsstrecke geleitet wird, um das Referenzsignal zu verzögern.

12. LIDAR-Vorrichtung (10) zum Messen von Geschwindigkeiten, mit einer Laserquelle (11) zum Aussenden von Laserstrahlung (15) auf ein zu messendes Medium (16) und einem Detektor (35) zum Empfangen von Strahlung (18), die bei Bestrahlung mit der Laserstrahlung (15) von dem Medium (16) abgestrahlt, insbesondere gestreut, wird,
wobei die Laserquelle (11) zur Aussendung eines Laserpulses (40) fähig ist, wobei eine Schalteinrichtung (24) zum Aktivieren/Deaktivieren des Detektors (35) abhängig von einem Zeitpunkt des Aussendens des Laserpulses (40) durch die Laserquelle (11) vorgesehen ist und
wobei die Schalteinrichtung (24) zum Aktivieren des Detektors (35) nach einer vorbestimmten oder geregelten ersten Zeitdauer (T1) von weniger als etwa 500µs nach Absenden des Laserpulses (40) auf das zu messende Medium (16) und zum Deaktivieren des Detektors (35) nach einer zweiten Zeitdauer (T2) ausgebildet ist, wobei eine Steuereinrichtung (22) vorgesehen ist, mittels der die erste Zeitdauer (T1) zwischen dem Aussenden des Laserpulses aus der Laserquelle (11) und dem Einschaltzeitpunkt (t1) für den Detektor (35) und die zweite Zeitdauer (T2) zwischen dem Einschaltzeitpunkt (t1) und dem Ausschaltzeitpunkt (t2) für den Detektor (35) derart steuerbar sind, dass damit ein Messabstand (r1) und eine Messtiefe (r2-r1) einstellbar sind, wobei die zweite Zeitdauer (T2) zwischen dem Einschaltzeitpunkt (t1) und dem Ausschaltzeitpunkt (t2) weniger als etwa 1µs beträgt, **dadurch gekennzeichnet, dass** die Steuereinrichtung (22) dazu ausgebildet ist, den Detektor (35) zu Beginn einer Belichtungszeit einzuschalten und den Detektor mittels der Schalteinrichtung (24) während dieser Belichtungszeit zu aktivieren und inaktivieren, so dass das Schalten mit der ersten und der zweiten Zeitdauer mehrmals durchgeführt wird, um mehrere Laserpulse während einer einzigen Belichtungszeit zu detektieren, und die Zeitdauern (T1, T2) und/oder die Zeitpunkte (t1, t2) abhängig von den folgenden Parametern zu regeln:
• Mindestintensität des detektierten Signals und
• Maximalintensität des detektierten Signals.

13. LIDAR-Vorrichtung nach Anspruch 12,
**dadurch gekennzeichnet,**
**dass** der Detektor (35) wenigstens eine der folgenden Lichterfassungseinrichtungen aufweist:
• einen bildgebender Detektor, insbesondere Kamera (36),
• ein lichtempfindliches Element, insbesondere Photodiode oder Photomultiplier, oder
• eine Gruppe von lichtempfindlichen Elementen, insbesondere Photodioden, und
a) **dass** die Schalteinrichtung (24) wenigstens ein dem Detektor (35) vorgeschaltetes Schaltelement (58, 60, 34) zum Durchlassen oder Sperren eines Lichtdurchganges und/oder einer Lichtleitung zu dem Detektor (35) aufweist, das ausgewählt ist aus einer Gruppe, die:
• eine schaltbare Mikrokanalplatte (34),
• ein elektrooptischer Schalter mit elektrooptischem Material,
• eine Flüssigkristallzelle und/oder
• ein mikromechanisches, zur Schaltung bewegbares Schaltelement umfasst, und/oder
b) **dass** die Schalteinrichtung (24) mit wenigstens einem Ausgang des Detektors (35) verbunden ist, um die Schaltung zur Aktivierung/Deaktivierung elektrisch am Ausgang des Detektors (35) durchzuführen.

14. LIDAR-Vorrichtung nach einem der Ansprüche 12 oder 13,
**dadurch gekennzeichnet,**
**dass** ein optisch durchlässiges Abdeckelement, insbesondere ein Fenster (14), zwischen der Laserquelle (11) und dem Detektor (35) einerseits und dem zu messenden Medium (16) andererseits vorgesehen ist,
wobei die Zeitpunkte (t1, t2) zum Aktivieren/Deaktivieren des Detektors (35) derart eingestellt sind, dass der Detektor (35) während einer Zeit inaktiv ist, in der ein von der Laserquelle (11) abgesandter Laserpuls (40), der an dem optisch durchlässigen Abdeckelement (14) reflektiert und/oder gestreut wird, an dem Detektor (35) ankommt.

15. LIDAR-Vorrichtung nach einem der voranstehenden Ansprüche, **dadurch gekennzeichnet,**
**dass** sie auf einem bewegten Träger angeordnet ist, wobei Zeitpunkte und/oder Zeitdauern zum Aktivieren/Deaktivieren des Detektors abhängig von der Geschwindigkeit des Trägers gesteuert sind.

## Claims

1. A method for LIDAR measurement of speeds, wherein a laser beam (15) is directed at the medium (16) to be measured, and radiation (18) which is subsequently emitted from the medium (16) is measured by means of a detector (35), wherein a spatial measurement range (r1, r2) is selected by activation of the detector (35) after a first predetermined or regulated time duration (T1) of less than about 500 µs after emission of a laser pulse (40) to the medium (16) to be measured, comprising the steps of:
a) transmission of a laser pulse (40) with the detector (35) inactive,
b) activation of the detector (35) at a predetermined or regulated switching-on time (t1) after transmission of the laser pulse (40) such that a radiation pulse (18), which has been scattered by the medium (16) after receiving the laser pulse (40) can be received, and
c) deactivation of the detector (35) at a predetermined or regulated switching-off time (t2) wherein step c) is carried out after step b),
and further comprising:
selection of a predetermined or regulated switching-on time (t1) corresponding to a desired minimum measurement range (r1) from the laser source (11) and
selection of a predetermined or regulated second time duration (T2) between the switching-on time (t1) and the switching-off time (t2) corresponding to a desired measurement depth (r2-r1) wherein the second time duration (T2) is less than about 1 µs,
**characterized by**
switching the detector (35) on at start of an exposure time and activating and deactivating the detector by means of a switching device during this exposure time, wherein the switching is carried out repeatedly with the first and second time durations in order to detect a plurality of laser pulses during a single exposure time,
wherein the time durations (T1, T2) and/or the times (t1, t2) are regulated as a function of the following parameters:
• minimum intensity of the detected signal, and
• maximum intensity of the detected signal.

2. The method as claimed in claim 1,
**characterized in that**
a switching time (τ) is less than about 1 µs, in the region of nanoseconds.

3. The method as claimed in one of the preceding claims,
**characterized by**
selection or regulation of the time durations (T1, T2) and/or of the times (t1, t2) as a function of measurement parameters and/or system parameters.

4. The method as claimed in claim 3,
**characterized in that**
the time durations (T1, T2) and/or the times (t1, t2) are selected or regulated as a function of at least one of the following parameters:
• nominal intensity of the detected signal,
• movement speed of a LIDAR apparatus by means of which the measurement method is carried out,
• expected dynamics of the measurement signal,
• coherence and/or gradient of a measured flow in the medium (16), in particular of an air gust when measuring air speeds.

5. The method as claimed in one of claims 3 or 4,
**characterized in that** at least one of the time durations (T1, T2) and/or of the times (t1, t2) is controlled and/or regulated dynamically and automatically, during a relatively long-lasting measurement operation.

6. The method as claimed in one of the preceding claims,
**characterized in that**
at least one duration (T1, T2) and/or at least one time (t1, t2) is selected, controlled, regulated and/or set differently in order to vary the spatial measurement range (r2-r1) for different measurement tasks.

7. The method as claimed in one of the preceding claims,
**characterized in that**
the first time duration (T1) is varied in a moving measurement system as a function of the speed of the measurement system, from one measurement pulse to the next within an exposure process.

8. The method as claimed in one of the preceding claims,
**characterized in that**
the method is carried out for measurement of air speeds from an aircraft and
**in that** the method is carried out with a relatively long measurement range for safety and in order to improve comfort, is carried out with a medium measurement range with higher accuracy in order to reduce loads on components of the aircraft, and is carried out with a shorter measurement range for optical measurement of air data, and the at least one time duration (T1, T2) and/or at least one of the times (t1, t2) are/is selected corresponding to these measurement tasks.

9. The method as claimed in one of the preceding claims,
**characterized in that**
a portion of the laser beam (15) is passed as a laser signal (64) for supplying a reference signal to the detector (35), wherein detection of the reference signal and/or detection of the radiation (18) emitted from the medium is selected by varying the time durations (T1, T2).

10. The method as claimed in claim 9,
**characterized in that**
the reference signal is detected periodically or randomly in a respective measurement cycle of the LIDAR measurement.

11. The method as claimed in claim 9 or 10,
**characterized in that**
the reference signal is passed via an optical delay path before arriving at the detector (35) in order to delay the reference signal.

12. A LIDAR apparatus (10) for measuring speeds, having a laser source (11) for transmission of laser radiation (15) to a medium (16) to be measured and a detector (35) for receiving radiation (18) which is emitted, in particular scattered, by the medium (16) when it is illuminated with the laser radiation (15),
wherein the laser source (11) can transmit a laser pulse (40),
wherein a switching device (24) is provided for activating/deactivating the detector (35) as a function of a time of transmission of the laser pulse (40) by the laser source (11), and
wherein the switching device (24) is designed to activate the detector (35) a predetermined or regulated first time duration (T1) of less than about 500 µs after emission of the laser pulse (40) to the medium (16) to be measured, and to deactivate the detector (35) after a second time duration (T2),
wherein a control device (22) is provided, by means of which the first time duration (T1) between the transmission of the laser pulse from the laser source (11) and the switching-on time (t1) of the detector (35) and the second time duration (T2) between the switching-on time (t1) and the switching-off time (t2) can be controlled such that a measurement separation (r1) and a measurement depth (r2-r1) can be selected in this way, wherein the second time duration (T2) between the switching-on time (t1) and the switching-off time (t2) is less than about 1 µs,
**characterized in that**
the control device is configured to swit the detector (35) on at start of an exposure time and activating and deactivating the detector by means of the switching device (24) during this exposure time, such that the switching is carried out repeatedly with the first and second time durations in order to detect a plurality of laser pulses during a single exposure time, and to regulate the time durations (T1, T2) and/or the times (t1, t2) as a function of the following parameters:
• minimum intensity of the detected signal, and
• maximum intensity of the detected signal.

13. The LIDAR apparatus as claimed in claim 12,
**characterized in that**
the detector (35) has at least one of the following light detection devices:
• an imaging detector, in particular a camera (36),
• a light-sensitive element, in particular a photodiode or photomultiplier, or
• a group of light-sensitive elements, in particular photodiodes.
and
a) **in that** the switching device (24) has at least one switching element (58, 60, 34), which is connected upstream of the detector (35) in order to allow or block a light passage and/or light conduction to the detector (35), wherein the the switching element (58, 60, 34) is selected from a group which comprises:
• a switchabie microchannel plate (34),
• an electrooptical switch with efectroopfiical material,
• a liquid crystal cell and/or
• a micromechanical switching element which can be moved for switching, and/or
b) **in that** the switching device (24) is connected to at least one output of the detector (35), in order to carry out the switching for activation/deactivation electrically at the output of the detector (35).

14. The LIDAR apparatus as claimed in one of claims 12 or 13,
**characterized in that**
an optically transmissive cover element, in particular a window (14), is provided between the laser source (11) and the detector (35) on the one hand and the medium (16) to be measured on the other hand,
wherein the times (t1, t2) for activation/deactivation of the detector (35) are selected such that the detector (35) is inactive during a time in which a laser pulse (40) which has been emitted by the laser source (11) and is reflected and/or scattered on the optically transmissive cover element (14) arrives at the detector (35).

15. The LIDAR apparatus as claimed in one of the preceding claims, **characterized in that**
the LIDAR apparatus is arranged on a moving carrier, wherein times and/or time durations for activation/deactivation of the detector are controlled as a function of the speed of the carrier.

## Revendications

1. Procédé pour la mesure de vitesse au LIDAR, dans lequel on oriente un faisceau laser (15) vers le milieu à mesurer (16) et on mesure au moyen d'un détecteur (35) le rayonnement (18) réémis ensuite par le milieu (16), et dans lequel on établit une zone de mesure dans l'espace (r1, r2) par activation du détecteur (35) après une première durée temporelle (T1) prédéterminée ou régulée de moins d'environ 500 µs après émission d'une impulsion laser (40) vers le milieu à mesurer (16) et par inactivation du détecteur (35) après une seconde durée temporelle (T2), incluant les étapes suivantes :
a) on émet une impulsion laser (40) alors que le détecteur est inactif (35),
b) on active le détecteur (35) à un instant de mise en marche (t1) prédéterminée ou régulée après émission de l'impulsion laser (40) de telle façon qu'une impulsion de rayonnement (18) diffusé par le milieu (16) après réception de l'impulsion laser (40) peut être reçue, et
c) on inactive le détecteur (35) à un instant de mise à l'arrêt (t2) prédéterminé ou régulé, l'étape c) étant exécutée après l'étape (b),
et incluant en outre :
on établit l'instant de mise en marche (t1) prédéterminé ou régulé en correspondance d'un éloignement de mesure minimum souhaité (r1) de la source laser (11), et
on établit la seconde durée temporelle prédéterminée ou régulée (T2) entre l'instant de mise en marche (t1) et l'instant de mise à l'arrêt (t2) en correspondance d'une profondeur de mesure souhaitée (r2-r1), ladite seconde durée temporelle (T2) étant inférieure à environ 1 µs,
**caractérisé par le fait que**
on met en marche détecteur au commencement d'un temps d'éclairage et on active le détecteur et on le désactive au moyen d'un dispositif de commutation pendant ce temps d'éclairage, la commutation étant effectuée plusieurs fois avec la première et avec la seconde durée temporelle, afin de détecter plusieurs impulsions laser pendant un unique temps d'éclairage,
dans lequel les durées temporelles (T1, T2) et/ou les instants (t1, t2) sont régulé(e)s en fonction des paramètres suivants :
- intensité minimum du signal détecté, et
- intensité maximum du signal détecté.

2. Procédé selon la revendication 1,
**caractérisé en ce qu'**un temps de commutation (t) est plus court qu'environ 1 µs dans la plage des nanosecondes.

3. Procédé selon l'une des revendications précédentes,
**caractérisé en ce que**
on établit ou on régule les durées temporelles (T1, T2) et/ou les instants (t1, t2) en fonction de paramètres de mesure et/ou de paramètres du système.

4. Procédé selon la revendication 3,
**caractérisé en ce que** les durées temporelles (T1, T2) et/ou les instants (tl, t2) sont établis ou régulés en fonction de l'un au moins des paramètres suivants :
- intensité de consigne du signal détecté,
- vitesse de déplacement d'un dispositif LIDAR au moyen duquel le procédé de mesure est mis en oeuvre,
- dynamique attendue du signal de mesure,
- cohérence et/ou gradient d'un écoulement mesuré dans le milieu (16), en particulier d'une rafale de vent lors de la mesure de vitesse de l'air.

5. Procédé selon l'une des revendications 3 ou 4,
**caractérisé en ce que** l'une au moins des durées temporelles (T1, T2) et/ou l'un au moins des instants (t1, T2) est commandé(e) et/ou régulé(e) au automatiquement de façon dynamique pendant une campagne de mesures de durée plus longue.

6. Procédé selon l'une des revendications précédentes,
**caractérisé en ce que** l'une au moins des durées temporelles (T1, T2) et/ou l'un au moins des instants (T1, T2) est sélectionné(e), commandé(e), régulé(e) et/ou établi(e) de façon différente afin de modifier la plage de mesure dans l'espace (r2-r1) pour des tâches de mesure différentes.

7. Procédé selon l'une des revendications précédentes,
**caractérisé en ce que**, pour un système de mesure en mouvement, la première durée temporelle (T1 est modifiée en fonction de la vitesse du système de mesure d'une impulsion de mesure à une autre impulsion de mesure à l'intérieur d'un processus d'éclairage.

8. Procédé selon l'une des revendications précédentes,
**caractérisé en ce que** le procédé est mis en oeuvre pour la mesure de vitesse de l'air depuis un aéronef, et le procédé est mis en oeuvre avec une grande distance de mesure pour la sécurité et pour l'amélioration du confort, il est mis en oeuvre avec une distance de mesure moyenne et avec haute précision afin de réduire la charge sur des composants de l'aéronef, et il est mis en oeuvre avec une courte distance de mesure pour la mesure optique de données aérauliques, et ladite au moins une période temporelle (T1, T2) et/ou l'un au moins des instants (t1, t2) est établi(e) en correspondance de ces tâches de mesure.

9. Procédé selon l'une des revendications précédentes,
**caractérisé en ce qu'**une partie du faisceau laser (15) est amenée au détecteur (35) sous forme de signal laser (64) pour fournir un signal de référence, et par modification des durées temporelles (T1, T2) on sélectionne une détection du signal de référence et/ou une détection du rayonnement (18) réémis par le milieu.

10. Procédé selon la revendication 9,
**caractérisé en ce qu'**une détection du signal de référence a lieu périodiquement ou de façon aléatoire dans un cycle de mesure respectif de la mesure LIDAR.

11. Procédé selon l'une des revendications 9 ou 10,
**caractérisé en ce que** le signal de référence est amené, avant d'atteindre le détecteur (35), sur un trajet de retard optique, afin de retarder le signal de référence.

12. Appareil LIDAR (10) pour mesurer des vitesses, comprenant une source laser (11) pour émettre un rayonnement laser (15) vers un milieu à mesurer (16) et un détecteur (35) pour la détection du rayonnement (18) qui, lors de l'application de rayonnement laser (15), est réémis par le milieu (16) est en particulier diffusé,
dans lequel la source laser (11) est capable d'émettre une impulsion laser (40),
il est prévu un dispositif de commutation (24) pour activer/désactiver le détecteur (35) en fonction d'un instant d'émission de l'impulsion laser (40) par la source laser (11), et
dans lequel le dispositif de commutation (24) est réalisé pour activer le détecteur (35) après une première durée temporelle prédéterminée ou régulée (T1) de moins d'environ 500 µs après émission de l'impulsion laser (40) vers le milieu à mesurer (16), et pour désactiver le détecteur (35) après une seconde durée temporelle (T2),
dans lequel il est prévu un dispositif de commande (22) au moyen duquel la première durée temporelle (T1) entre l'émission de l'impulsion laser provenant de la source laser (11) et l'instant de mise en marche (t1) pour le détecteur (35) et la seconde durée temporelle (T2) entre l'instant de mise en marche (t1) et l'instant de mise à l'arrêt (t2) pour le détecteur (35) sont susceptibles d'être commandées de telle façon qu'il est possible d'établir ainsi une distance de mesure (r1) et une profondeur de mesure (r1-r2), la seconde durée temporelle (T2) entre l'instant de mise en marche (t1) et l'instant de mise à l'arrêt (t2) étant plus courte qu'environ 1 µs,
**caractérisé en ce que**
le dispositif de commande (22) est réalisé pour mettre en marche le détecteur (35) au commencement d'un temps d'éclairage, et activer et désactiver le détecteur au moyen du dispositif de commande (24) pendant ce temps d'éclairage, de sorte que la commutation avec la première et la seconde durée temporelle est effectuée plusieurs fois afin de détecter plusieurs impulsions laser pendant un unique temps d'éclairage, et de réguler les durées temporelles (T1, T2) et/ou les instants (t1, t2) en fonction des paramètres suivants :
- intensité minimum du signal détecté, et
- intensité maximum du signal détecté.

13. Appareil LIDAR selon la revendication 12,
**caractérisé en ce que** le détecteur (35) comprend l'un au moins des dispositifs de détection de lumière suivants :
- un détecteur d'imagerie, en particulier une caméra (36),
- un élément photosensible, en particulier une photodiode ou un photomultiplicateur, ou
- un groupe d'éléments photosensibles, en particulier de photodiodes,
et
a) **en ce que** le dispositif de commutation (24) comprend au moins un élément de commutation (58, 60, 34) placé en avant du détecteur (35) pour laisser passer ou pour bloquer un passage de lumière et/ou un guide de lumière vers le détecteur (35), qui est sélectionné parmi un groupe incluant :
- une plaque à microcanaux commutable (34),
- un commutateur electrooptique avec un matériau électrooptique,
- une cellule à cristaux liquides, et/ou
- un élément de commutation micromécanique déplaçable pour la commutation, et/ou
b) **en ce que** le dispositif de commutation (24) est relié à au moins une sortie du détecteur (35) afin d'effectuer la commutation pour l'activation/désactivation de façon électrique à la sortie du détecteur (35).

14. Appareil LIDAR selon l'une des revendications 12 ou 13, **caractérisé en ce qu'**il est prévu un élément de recouvrement optiquement transparent, en particulier une fenêtre (14), entre la source laser (11) et le détecteur (35) d'une part et entre le milieu à mesurer (16) d'autre part,
dans lequel les instants (tl, t2) pour activer/désactiver le détecteur (35) sont établis de telle façon que le détecteur (35) est inactif pendant un temps pendant lequel une impulsion laser (40) émise par la source laser (11), qui est réfléchie et/ou diffusée sur l'élément de recouvrement (14) optiquement transparent, parvient au détecteur (35).

15. Appareil LIDAR selon l'une des revendications précédentes, **caractérisé en ce qu'**il est agencé sur un support mobile, et les instants et/ou les durées temporelles pour activer/désactiver le détecteur sont commandé(e)s en fonction de la vitesse du support.
